# EUROPÄISCHE PATENTSCHRIFT

(11) **EP 2 956 695 B1**
(45) Veröffentlichungstag und Bekanntmachung des Hinweises auf die Patenterteilung: **22.05.2019**
(21) Anmeldenummer: 14733315.7
(22) Anmeldetag: 25.03.2014
(51) Int. Cl.: F16J 15/447, F16C 33/80, F16C 33/78

(54) **DICHTUNGSANORDNUNG ZUM BERÜHRUNGSFREIEN ABDICHTEN VON WÄLZLAGERN**
SEAL ARRANGEMENT FOR NON-CONTACT SEALING OF ROLLING CONTACT BEARINGS
DISPOSITIF D'ÉTANCHÉITÉ DESTINÉ À L'ÉTANCHÉITÉ SANS CONTACT DE PALIERS À ROULEMENT

(30) Priorität: 13.02.2013 DE 102013002490
(43) Veröffentlichungstag der Anmeldung: 23.12.2015
(73) Patentinhaber: CBSG 3D FREIFORM GMBH, 76646 Bruchsal (DE)
(72) Erfinder: SCHOLZ, Eckhard, 75015 Bretten (DE); SCHOLZ, Yu Hua, 75015 Bretten (DE)
(86) Internationale Anmeldenummer: PCT/IB2014/001092
(87) Internationale Veröffentlichungsnummer: WO 2014/132140

(56) Entgegenhaltungen:
- EP-B1- 1 329 653
- FR-A- 1 025 883

## Beschreibung

Die Erfindung betrifft eine Dichtungsanordnung zum berührungsfreien Abdichten von Wälzlagern, insbesondere zur Abdichtung von Wälzlagern in Förderern, Werkzeugmaschinen, Pumpen, Elektromotoren und dergleichen. Spezifischer betrifft die Erfindung eine Verbesserung der Anordnung von berührungsfreien Fanglabyrinthdichtungen.

Solche Dichtungsanordnungen der berührungsfreien Labyrinthdichtungen sind durch die EP 13 29 653 B1, EP 20 25 977 A2, GB 24 31 440 A bekannt, die eine Abdichtfunktion ausüben, dass einerseits kein Schmieröl von der Wälzlagerseite austreten und andererseits kein Wasser und Verunreinigung von der Atmosphärenseite eintreten kann, welche aus mindestens einem oder mehreren Dichtelementen und der elastomeren Dichtungseinheit, bestehen, davon mindestens ein Dichtelement mit dem umgebenden, feststehenden Maschinenteil zusammen angeordnet ist und mindestens ein Dichtelement an einem drehbaren Maschinenteil angeordnet ist. Nachteilig dabei ist allerdings, dass diese Dichtungsanordnungen aufgrund der baulichen Gegebenheiten bei einer etwas heftigen schwallartigen auftretenden Überflutung der Dichtspalten der Dichtelemente überfordert sind, dass so erzielte Abdichtungsergebnis indessen wenig befriedigend ist und dass sie durch das Überfüllen des Ölstandes auch überfordert sind, denn es stellt sich auf Grund der Konstruktion und der Kapillarwirkung eine Pumpwirkung ein, die selbst nach der Absenkung des Ölstandes fortdauert und eine Ölleckage verursacht. Dieser Effekt kann nur durch eine zeitraubende Demontage mit der anschließenden Reinigung der Dichtung unterbunden werden. Weiter erfolgt die axiale und radiale Kraftübertragung von dem drehenden Maschinenteil auf die rotierenden Dichtelemente über die elastomeren Dichtungseinheiten, so dass auf Grund der Materialalterung und etwaigen häufigen Lastwechseln die Gefahr besteht, dass die Kraftübertragung gerade bei größeren Massen nicht dauerhaft gewährleistet ist.

Der Erfindung liegt die Aufgabe zu Grunde, mit einer einfachen Dichtungsanordnung die Nachteile der eingangs beschriebenen Art so zu beseitigen und eine wesentliche Verbesserung solcher Labyrinthdichtungsanordnungen zu erreichen, so dass ein wirksames Dichtergebnis, welches für eine berührungsfreie Fanglabyrinthdichtung bislang nicht für möglich gehalten wurde erzielt wird.

Die Aufgabe wird durch die kennzeichnenden Merkmale des Anspruches 1 in Verbindung mit seinen Oberbegriffsmerkmalen gelöst. Die Unteransprüche bilden vorteilhafte Weiterbildungen der Erfindung.

Um den Nachteil der eingangs beschriebenen Art so zu beseitigen und eine einwandfreie Abdichtung bei einer heftigen schwallartigen Überflutung zu der Dichtspalte zu erreichen, ist es vorgesehen, dass eine 3-teilige vormontierte Labyrinthdichtung, die aus einem statischen Dichtelement, welches mit dem umgebenden, feststehenden Maschinenteil zusammen eingepresst ist und aus zwei mitrotierenden Dichtelementen, die in dem statischen Dichtelement berührungslos eingefügt sind, bestehen, wobei das auf dem drehbaren Maschinenteil sitzende mitrotierende Dichtelement mit dem drehbaren Maschinenteil mittels Gewindestiften, Zylinderstiften, Freidrehung, Bohrungen und mitrotierendem Dichtelement verspannt und dadurch axial und radial fixiert angeordnet ist.

Die Ausgestaltung der Dichtungsanordnung bewirkt eine hohe Dichtheit spezifisch durch erfindungsgemäßen Anspruches 1, dass die Umlaufnuten des statischen Dichtelementes konische Außenflächen und Innenflächen besitzen, die sich axial gegenüber den Spritzringnasen der mitrotierenden Dichtelemente zu den Umlaufnutgründen hin erweitern und dass die Umlaufenden Spritzringnasen konischen Außenflächen und Innenflächen besitzen, die axial in die gegenüberstehenden Umlenknuten verjüngend hineinragen.

Das im Innern der Getriebeeinheit umher geschleuderte Schmieröl wird durch seine adhäsive Eigenschaft an den Flächen des stehenden Maschinenteiles haften und wandert dann in Richtung des drehbaren Maschinenteildurchganges. Durch diese Dichtungsanordnung wird es erreicht, dass aus dem Lager austretendes Öl, welches an den Flächen des stehenden Maschinenteils haftet, an dem umlaufenden drehbaren Maschinenteil bzw. dem mit diesem drehbaren Maschinenteil umlaufenden mitrotierenden Dichtelement entlang wandert, zunächst durch die unterschiedlichen Hindernisse dieser berührungsfreien verzahnten Konusflächen der Spritzringnasen und Umlaufnuten, die die Funktion der Abspritzung, Auffangen, Wegschleudern und Umlenkung ausüben, aufgehalten, umgeleitet und abgeführt wird, so dass es sich anschließend statt die Labyrinthnuten des statischen Dichtelementes zu überfordern, doch im Ölsumpf sammelt.

Im Detail wird dieser Schmierölfluss lagerseitig durch die obere Umlenknut des statischen Dichtelementes aufgefangen und zum Ölsumpf hin nach unten abgeleitet. Schmieröl, welches direkt auf der konischen Spritzringnase des lagerseitigen mitrotierenden Dichtelementes, die in die gegenüberstehende konische Umlenknut des statischen Dichtelementes hineinragt, landet, wird durch die Zentrifugalkraft und durch ihre konische Form entlang der konischen Spritzringnase von dem statischen Dichtelement weggefördert und weggeschleudert. Treten die heftigen schwallartigen Überflutungen an den Dichtelementen durch das Schmieröl auf, so wird es durch die gegenüber der Spritzringnase des lagerseitig mitrotierenden Dichtelementes stehende konische Umlenknut des statischen Dichtelementes abgeleitet, und kann durch die lagerseitige Ablaufnut des statischen Dichtelementes dem Ölsumpf zugeführt werden. Anschließend kann dadurch kein oder nur sehr wenig Öl zu den Labyrinthnuten des statischen Dichtelementes gelangen. Dringt ein wenig Öl in die Labyrinthnuten des statischen Dichtelementes ein, so wird es wiederum durch die Ablaufbohrung des statischen Dichtelementes zu dem Ölsumpf zurückgeführt. Wird der Betrieb des Getriebes unterbrochen, so wird das an der konischen Innenfläche und Außenfläche der Spritzringnase des Dichtelementes haftende Schmieröl dann unter anderem in Richtung des stehenden drehbaren Maschinenteiles laufen und das Schmieröl, dass von der Abtropfnase des statischen Dichtelementes tropft, von der unteren Umlenknut des mitrotierenden Dichtelementes aufgefangen, über die Abspritzkante des mitrotierenden Dichtelementes zurück zu der Umlenknut abgetropft und über die Ablaufnut des statischen Dichtelement dem Ölsumpf zugeführt. Die Labyrinthnuten werden somit kaum beansprucht.

Dieselbe Funktionsweise lagerseitig mit der Kombination des statischen Dichtelementes und des mitrotierenden Dichtelementes ist auf der Atmosphärenseite mit der Kombination des statischen Dichtelementes und des mitrotierenden Dichtelementes zu erwarten, denn die erfinderischen Merkmalen der lagerseitigen Kombination weisen die vergleichbaren Eigenschaften der Atmosphärenseitigen Kombination auf.

Mindestens zwei O-Ringe sind vorgesehen, um die Kontaktstellen zwischen dem feststehenden Maschinenteil und dem statischen Dichtelement, und zwischen dem drehbaren Maschinenteil und einem mitrotierenden Dichtelement abzudichten, so dass eine einwandfreie, wirksame Dichtfunktionalität der Dichtungsanordnung somit erreicht ist.

Ein weiterer Vorteil dieser Ausführung ist, dass die aufwendige Demontage und Reinigung der Dichtung durch die Erweiterung der Dichtspalte zwischen dem statischen Dichtelement und den mitrotierenden Dichtelementen erspart bleibt, so dass einer unnötigen Ölleckage vorgebeugt wird, da die in Verbindung mit den Oberbegriffsmerkmalen bekannte Labyrinthdichtung auf Grund der baulichen Gegebenheiten, auch durch das Überfüllen ihres Ölstandes, überfordert ist und sich auf Grund der Konstruktion und der Kapillarwirkung eine Pumpwirkung einstellt, die selbst nach der Absenkung des Ölstandes fortdauert und eine Ölleckage verursacht, welche nur durch eine zeitraubende Demontage mit anschließender Reinigung der Dichtung unterbunden werden kann.

Um die durch die konventionelle Elastomere-Dichtung von dem drehbaren Maschinenteil auf die mitrotierenden Dichtelemente axiale und radiale Kraftübertragung zu verbessern, ist es vorgesehen, dass eine metallische formschlüssige Kraftübertragung von dem drehbaren Maschinenteil auf die mitrotierenden Dichtelemente erreicht wird, wobei die mit dem drehbaren Maschinenteil mitrotierenden Dichtelemente mittels Gewindestiften, Zylinderstiften und Gewindebohrungen des Dichtelementes gemeinsam mit dem drehbaren Maschinenteil verspannt und dadurch axial und radial fixiert sind.

Im Hinblick auf eine einfache Montage sind Zylinderstifte mit Gewindestiften axial über einer Freidrehung zur Erleichterung der axialen Einstellung bei der Montage auf dem drehbaren Maschinenteil angeordnet, wobei die Zylinderstifte in die Freidrehung eingreifen sollen, so dass das gemeinsame Verschieben der beiden mitrotierenden Dichtelemente ermöglicht wird.

Ein Kernvorteil dieser Erfindung besteht darin, dass bei einem Einsatz der erfindungsgemäßen Dichtungsanordnung trotz einer heftigen schwallartigen Überflutung der Dichtelemente ein einwandfreies und wirksames Dichtergebnis erreicht ist.

Die Erfindung zeigt vorteilhaft, wie die Lebensdauer und die Dichtleistung, bei einem Einsatz der erfindungsgemäßen Dichtungsanordnung trotz heftiger schwallartiger Überflutungen, insbesondere um eine durch enge Spalten hervorgerufene Kapillarwirkung und eine durch die Rotation der dynamischen Dichtungselemente erzeugte Pumpwirkung zu unterbinden und bei der Verbesserung der axialen und radialen Kraftübertragung der Elastomere-Dichtung vom drehbaren Maschinenteil auf das mitrotierende Dichtelement, kostengünstig erhöht werden können.

Weitere Einzelheiten der Erfindung gehen aus der anhängenden Zeichnung hervor.

Mit (1) ist eine 3-teilige vormontierte Labyrinthdichtung bezeichnet, die sich zwischen dem Maschinenteil (6) und dem Maschinenteil (2) befindet.

Die 3-teilige vormontierte Labyrinthdichtung (1) besteht aus dem Dichtelement (8), und zwei Dichtelementen (9, 16), die in mehreren Bereichen des Dichtelementes (8) berührungslos eingefügt sind, wobei das Dichtelement (16) mit dem Maschinenteil (6) mittels Gewindestiften (3), Zylinderstiften (4), Freidrehung (23) und des Dichtelementes (9) verspannt und dadurch axial und radial fixiert angeordnet ist, so dass eine metallische formschlüssige Kraftübertragung von dem Maschinenteil (6) auf die Dichtelemente (9, 16) erreicht ist.

Im Hinblick auf eine einfache Montage sind Zylinderstifte (4) mit Gewindestiften (3) axial über einer Freidrehung (23) zur Erleichterung der axialen Einstellung bei der Montage angeordnet, wobei die Zylinderstifte (4) in die Freidrehung (23) eingreifen sollen, so dass das gemeinsame Verschieben der beiden Dichtelemente (9, 16) ermöglicht wird.

Die Ausgestaltung der Dichtungsanordnung bewirkt eine hohe Dichtheit spezifisch durch erfindungsgemäßen Anspruch 1, dass die Umlaufnut (26) eine konische Außenfläche (40) und Innenfläche (41) besitzt, die axial gegenüber der Spritzringnase (10) zu dem Umlaufnutgrund hin erweitert, dass die umlaufende Spritzringnase (10) eine konische Außenfläche (33) und Innenfläche (34) besitzt, die axial in die gegenüberstehende Umlenknut (26) sich verjüngend hineinragt, dass die Umlaufnut (25) eine konische Außenfläche (42) und Innenfläche (43) besitzt, die sich axial gegenüber der Spritzringnase (11) zu dem Umlaufnutgrund hin erweitert, dass die umlaufende Spritzringnase (11) eine konische Außenfläche (31) und Innenfläche (32) besitzt, die axial in die gegenüberstehende Umlenknut (25) sich verjüngend hineinragt.

Durch diese Dichtungsanordnung wird es erreicht, dass das umherschleudernde Öl, welches an den Flächen des Maschinenteils (2) haftet, an dem Maschinenteil (6) bzw. an dem zwischen den Maschinenteilen (2, 6) umlaufenden Dichtelement (16) entlang wandert, zunächst durch die unterschiedlichen Hindernisse, wie z. B. dieser berührungsfreien verzahnten konischen Außen- und Innenflächen (31, 32, 33, 34) der Spritzringnasen (10, 11) und Umlaufnuten (25, 26), die die Funktion der Abspritzung, Auffangen, Wegschleudern und Umlenkung ausüben, aufgehalten, umgeleitet und abgeführt wird, so dass es sich anschließend statt die Labyrinthnuten (27, 28) des Dichtelementes (8) zu überfordern, doch im Ölsumpf (38) sammelt.

Die Lagerseite (35): Konkret wird dieser Schmierölfluss durch die Umlenknut (22) mit der Abspritzkante (37) teilweise aufgefangen, zum Ölsumpf (38) hin nach unten abgeleitet. Schmieröl, welches direkt auf die konische Außenfläche (33) läuft, wird durch die Zentrifugalkraft und durch seine konische Form entlang der Spritzringnasen (10) von dem Dichtelement (8) weggefördert und weggeschleudert. Treten etwas heftiger schwallartige Überflutungen an die Dichtelemente (8, 16) durch das Schmieröl auf, so wird es durch die Umlenknut (26) abgeleitet und kann durch die Ablaufnut (21) dem Ölsumpf (38) zugeführt werden. Anschließend kann dadurch kein oder nur sehr wenig Öl zu den Labyrinthnuten (27, 28) gelangen. Dringt ein wenig Öl in die Labyrinthnuten (27, 28) ein, so wird es wiederum durch die Ablaufbohrung (5) zu dem Ölsumpf (38) zurückgeführt. Wird der Betrieb des Getriebes unterbrochen, so wird das an der konischen Außenfläche (33) und Innenfläche (34) der Spritzringnase (10) haftende Schmieröl unter anderem in Richtung des Maschinenteils (6) laufen und das Schmieröl, dass von der Abtropfnase (12) tropft, von der Umlenknut (24) aufgefangen, über die Abspritzkante (18) zurück zu der Umlenknut (24) abgetropft und über die Ablaufnut (21) dem Ölsumpf (38) zugeführt. Die Labyrinthnuten (27, 28) werden somit kaum beansprucht.

Die Atmosphärenseite (36): Im Detail wird verunreinigtes wasserartiges Medium, welches direkt auf der konische Außenfläche (31) landet, durch die Zentrifugalkraft und durch seine konische Form entlang der Spritzringnase (11) von dem Dichtelement (8) weggefördert und weggeschleudert. Treten etwas heftigere schwallartige Überflutungen an den Dichtelementen (8, 9) durch das verunreinigte wasserartige Medium auf, so wird es durch die Umlenknut (25) und durch die Ablaufnut (20) in den Ablauf (44) abgeleitet und anschließend kann dadurch kein oder nur sehr wenig verunreinigtes wasserartiges Medium zu der Labyrinthnut (29) gelangen. Dringt ein wenig verunreinigtes wasserartiges Medium in die Labyrinthnut (29) ein, so wird es wiederum durch die Ablaufbohrung (7) zu dem Ablauf (44) zurückgeführt. Wird der Betrieb des Getriebes unterbrochen, so wird das an den konischen Außenflächen und Innenflächen (31, 32) haftende verunreinigte wasserartige Medium unter anderem in Richtung des Maschinenteils (6) laufen und das verunreinigte wasserartige Medium, dass von der Abtropfnase (13) tropft, von der Umlenknut (30) aufgefangen, über die Abspritzkante (39) zurück zu der Umlenknut (30) abgetropft und über die Ablaufnut (20) dem Ablauf (44) zugeführt. Die Labyrinthnut (29) wird somit kaum beansprucht.

Um einen weiteren Nachteil der eingangs beschriebenen Art zu beseitigen, ist es vorgesehen, dass die Dichtspalte (14, 15) zwischen dem Dichtelement (8) und den Dichtelementen (9, 16) entsprechend erweitert sind. Der mit der Erfindung erzielte Vorteil besteht insbesondere darin, dass die Kapillarwirkung und der sehr nachteilige Pumpeffekt unterbunden sind, so dass auch die durch Überfüllung des Ölstandes verursachte aufwendige Demontage und Reinigung der Dichtung entfallen und einer unnötigen Ölleckage vorgebeugt wird.

### Bezugszeichenliste

- 1: Labyrinthdichtung
- 2: Maschinenteil
- 3: Gewindestift
- 4: Zylinderstift
- 5: Ablaufbohrung
- 6: Maschinenteil
- 7: Ablaufbohrung
- 8: Dichtelement
- 9: Dichtelement
- 10: Spritzringnase
- 11: Spritzringnase
- 12: Abtropfnase
- 13: Abtropfnase
- 14: Dichtspalt
- 15: Dichtspalt
- 16: Dichtelement
- 17: O-Ring
- 18: Abspritzkante
- 19: O-Ring
- 20: Ablaufnut
- 21: Ablaufnut
- 22: Umlenknut
- 23: Freidrehung
- 24: Umlenknut
- 25: Umlenknut
- 26: Umlenknut
- 27: Labyrinthnut
- 28: Labyrinthnut
- 29: Labyrinthnut
- 30: Umlenknut
- 31: Konische Außenfläche
- 32: Konische Innenfläche
- 33: Konische Außenfläche
- 34: Konische Innenfläche
- 35: Lagerseite
- 36: Atmosphärenseite
- 37: Abspritzkante
- 38: Ölsumpf
- 39: Abspritzkante
- 40: Konische Außenfläche
- 41: Konische Innenfläche
- 42: Konische Außenfläche
- 43: Konische Innenfläche
- 44: Ablauf

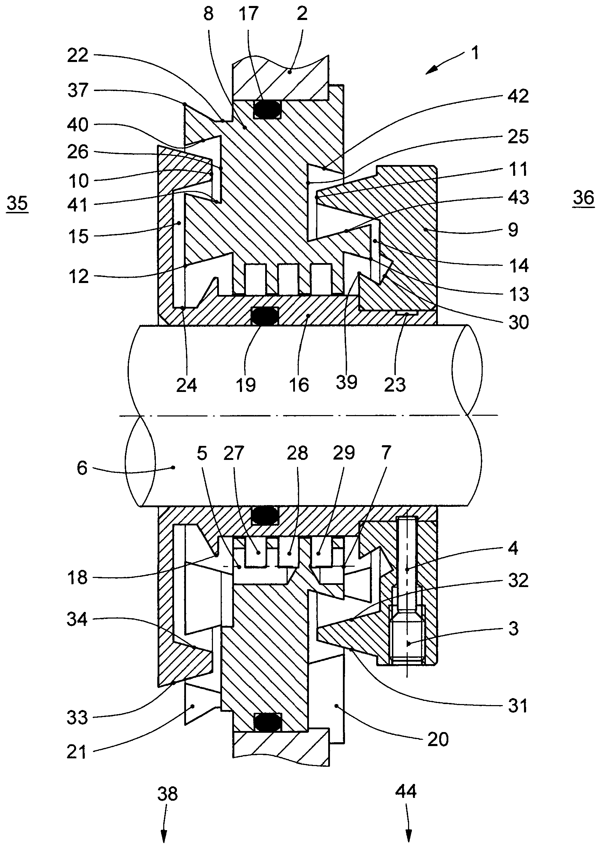

## Patentansprüche

1. Dichtungsanordnung zum berührungsfreien Abdichten von Wälzlagern, bestehend aus mindestens einem ersten Dichtelement (8), welches mindestens zwei Labyrinthnuten (27, 28, 29), mindestens zwei Ablaufnuten (20, 21) und mindestens zwei Ablaufbohrungen (5, 7) besitzt und mit einem umgebenden, feststehenden Maschinenteil (2) zusammen angeordnet ist, wobei wenigstens ein O-Ring (17) die Kontaktstelle des Zusammenbaus abdichtet, und mindestens einem zweiten Dichtelement (16), welches an einem drehbaren Maschinenteil (6) angeordnet ist, wobei wenigstens ein O-Ring (19) die Kontaktstelle des Zusammenbaus abdichtet, **dadurch gekennzeichnet,**
**dass** eine erste umlaufende Umlenknut (26) des ersten Dichtelements (8) eine konische Außenfläche (40) und Innenfläche (41) besitzt, die sich axial gegenüber einer ersten Spritzringnase (10) zu dem Umlaufnutgrund hin erweitert, dass die umlaufende erste Spritzringnase (10) eine konische Außenfläche (33) und Innenfläche (34) besitzt und axial in die gegenüberstehende erste Umlenknut (26) verjüngend hineinragt,
**dass** eine zweite umlaufende Umlenknut (25) des ersten Dichtelements (8) eine konische Außenfläche (42) und Innenfläche (43) besitzt, die sich axial gegenüber einer zweiten Spritzringnase (11) zu dem Umlaufnutgrund hin erweitert, und dass die zweite umlaufende Spritzringnase (11) eine konische Außenfläche (31) und Innenfläche (32) besitzt und axial in die gegenüberstehende zweite Umlenknut (25) verjüngend hineinragt.

2. Dichtungsanordnung nach Anspruch 1, **dadurch gekennzeichnet, dass** mindestens ein drittes Dichtelement (9) außer der zweiten Spritzringnase (11) mit der konischen Außenfläche (31) und Innenfläche (32) noch eine Umlenknut (30) und eine Abspritzkante (39) besitzt.

3. Dichtungsanordnung nach Anspruch 1, **dadurch gekennzeichnet, dass** das zweite Dichtelement (16) außer der Spritzringnase (10) mit der konischen Außenfläche (33) und Innenfläche (34) noch eine Umlenknut (24), eine Abspritzkante (18) und eine Freidrehung (23) besitzt.

4. Dichtungsanordnung nach Anspruch 1, **dadurch gekennzeichnet, dass** erste Dichtelement (8) außer seinen umlaufenden ersten und zweiten Umlenknuten (25, 26) mit den konischen Außenflächen (40, 42) und Innenflächen (41, 43) noch eine weitere Umlenknut (22) mit einer axial nach außen vorspringenden Abspritzkante (37) und nach unten vorspringende Abtropfnasen (12, 13) besitzt.

5. Dichtungsanordnung nach Anspruch 1 bis 4 **dadurch gekennzeichnet, dass** eine 3-teilige vormontierte Labyrinthdichtung (1) aus dem ersten, zweiten und dritten Dichtelement (8, 9, 16) gebildet ist, dass das zweite und dritte Dichtelement (9, 16) in mehreren Bereichen des ersten Dichtelementes (8) berührungslos eingefügt und angeordnet sind.

6. Dichtungsanordnung nach einem oder mehreren der vorhergehenden Ansprüche, **dadurch gekennzeichnet, dass** das auf dem drehenden Maschinenteil (6) sitzende zweite Dichtelement (16) mit dem drehenden Maschinenteil (6) mittels Gewindestiften (3), Zylinderstiften (4), einer Freidrehung (23) und dem dritten Dichtelement (9) verspannt und dadurch axial und radial fixiert angeordnet ist.

7. Dichtungsanordnung nach einem oder mehreren der vorhergehenden Ansprüche, **dadurch gekennzeichnet, dass** in Hinblick auf eine einfache Montage Zylinderstifte (4) mit Gewindestiften (3) axial über einer Freidrehung (23) zur Erleichterung der axialen Einstellung bei der Montage angeordnet sind, wobei die Zylinderstifte (4) in die Freidrehung (23) eingreifen, so dass das Verschieben der beiden zweiten und dritten Dichtelemente (9, 16) gemeinsam ermöglicht wird.

## Claims

1. Seal arrangement for non-contact sealing of anti-friction bearings, comprising: at least one first sealing element (8) having at least two labyrinth grooves (27,28,29), at least two drain grooves (20,21) and at least two drain holes (5,7) attached to the surrounding, stationary machine part (2), wherein at least one o-ring (17) seals the contact surface of the assembly, and at least one second sealing element (16) attached to a rotatable machine part (6), wherein at least one o-ring (19) seals the contact surface of the assembly; **characterized in that**:
the first circumferential guiding groove (26) of the first sealing element (8) has a conical outer face (40) and a conical inner face (41), which axially faces to the first thrower nose (10) and widens toward the guiding groove ground; the first circumferential thrower nose (10) has one conical outer face (33) and one conical inner face (34), which extends axially and taperingly into the opposing first guiding groove (26); the second circumferential guiding groove (25) of the first sealing element (8) has one conical outer face (42) and one conical inner face (43), which axially faces to the second thrower nose (11) and widens toward the guiding groove ground; the second circumferential thrower nose (11) has one conical outer face (31) and one conical inner face (32), which extends axially and taperingly into the opposing second guiding groove (25).

2. The sealing arrangement according to claim no. 1, wherein at least one third sealing element (9), in addition to having the second thrower nose (11) with the outer face (31) and the inner face (32), has also one guiding groove (30) and a splash edge (39).

3. The sealing arrangement according to claim no. 1, wherein the said second sealing element (16), in addition to having the said thrower nose (10) with the said conical outer face (33) and the said conical inner face (34), has also one guiding groove (24), one splash edge (18) and one undercut (23).

4. The sealing arrangement according to claim no. 1, wherein the said first sealing element (8), in addition to having the said first and second guiding grooves (25, 26) with the said conical outer faces (40, 42) and the said conical inner faces (41, 43), has further also one guiding groove (22) with an axially outwards protruded splash edge (37) and downwards protruded drip noses (12, 13).

5. The sealing arrangement according to claim no.1 to claim no. 4, wherein one three-piece pre-assembled labyrinth seal (1) consists of the said first, second and third sealing elements (8, 9, 16) that the second and third sealing elements (9, 16) are non-contact inserted in several spaces of the first sealing element (8).

6. The sealing arrangement according to one or more preceding claim, wherein the said second sealing element (16) which sits on a rotatable machine part (6), is axially and radial fixed to the rotatable machine part (6) via threaded pins (3), cylindrical pins (4), undercut (23) and the said third sealing element (9).

7. The sealing arrangement according to one or more preceding claims, wherein in view of a simple assembly cylindrical pins (4) combined with the threaded pins (3) are axially disposed over the undercut (23) to facilitate the axial adjustment during the assembly, surely that the cylindrical pins(4) are engaged in the undercut (23), so that a common shift of the two rotated sealing elements (9, 16) is enabled.

## Revendications

1. Dispositif d'étanchéité pour rendre étanche sans contact des paliers à rouleaux, constitué d'au moins d'un premier élément d'étanchéité (8) qui présente au moin deux rainures de labyrinthe (27, 28, 29), au moins deux rainures à drainage (20, 21) et au moins deux forages à drainage (5,7), et qui est positionné conjointement avec une partie de machine (2) entourante immobilière, dans lequel au moins une bague torique (17) rend étanche le point de contact de l'ensemble, et au moins d'un deuxième élément(16) d'étanchéité etant disposé sur une partie de machine rotative (6), dans lequel au moins une bague torique (19) rend étanche le point de contact de l'ensemble,
**caracterisé en se**
qu'une première rainure détournante circonférentielle (26) du prémier élément d'étanchéité (8) présente une surface extérieure conique (40) et une surface intérieure conique (41), positionée axialement en face d'un premier nez de la bague à centrifuger (10), s'élargit axialement en direction du fond de la rainure circonférentielle,
que le premier nez de la bague à centrifuger circonférentielle (10) présente une surface extérieure conique (33) et une surface intérieure conique (34), qui s'élèvent en se réduirant vers la première rainure détournante (26),
qu'une seconde rainure détournante circonférentielle (25) du premier élément d'étanchéité (8) présente une surface extérieur conique (42) et une surface intérieure conique (43) qui s'élargit en face d'un deuxième nez de la bague à centrifuger (11) axialement en direction du fond de la rainure détournante, et
que le deuxième nez de la bague à centrifuger entournante présente une surface extérieur conique (31) et une surface intérieure conique (32) et s'élève en se réduirant vers la deuxième rainure détournante (25).

2. Dispositif d'étanchéité selon la revendication 1, **caracterisé en se** qu'au moins un troisième élément d'étanchéité (9) contient une rainure détournante additionelle (30) et un bord à centrifuger (39), hors du deuxième nez de la bague à centrifuger (11) avec les surfaces coniques extérieures et intérieures (31) et (32).

3. Dispositif d'étanchéité selon la revendication 1, **caracterisé** en **se** que le deuxième élément d'étanchéité (16) contient une rainure détournante additionelle (24), un bord à centrifuger (18) et une rainure (23), hors du nez de la bague à centrifuger (10) avec les surface coniques extérieures et intérieures (33) et (34).

4. Dispositif d'étanchéité selon la revendication 1, **caracterisé en se** que le premier élément d'étanchéité (8) contient une rainure détournante additionelle (22) avec un bord à centrifuger (37) s'élévant en dehors, et des nez à dégoutter en saillie au-dessous (12, 13), hors de ses deux rainures détournantes (25, 26) avec leurs surfaces coniques extérieures (40, 42) et intérieures (41, 43).

5. Dispositif d'étanchéité selon les revendications 1 à 4, **caracterisé en se** que un joint à labyrinthe (1) est prémonté en usage des trois éléments d'étanchéités (8, 9, 16) et que le deuxième et le troisième élément d'étanchéité (9, 16) sont insérés et disposés dans plusieurs parties du premier élément d'étanchéité (8) sans les toucher.

6. Dispositif d'étanchéité selon un ou plusieurs des revendications précédentes, **caracterisé en se** que le deuxième élément d'étanchéité (16),qui est monté sur la partie de machine rotative (6), est joindu avec la partie de machine rotative (6) au moyen des vis filetées (3), des chevilles cylindriques (4), d'une rainure (23) et du troisième élément d'étanchéité (9) et ainsi est fixé axialement et radialement.

7. Dispositif d'étanchéité selon un ou plusieurs des revendications precedentes, **caracterisé en se** qu'en vue d'un montage facile les chevilles cylindriques (4) en combination avec les vis filetées (3) sont positionées axialement au-dessus d'une rainure (23) pour faciliter l'ajustage axiale pendant le montage de l'assemblage ainsi que les chevilles cylindriques (4) touchent la rainure (23) pour rendre possible le mouvement du deuxième et du troisième élément d'étanchéité (9, 16) en même temps.
